(19) Europäisches Patentamt
European Patent Office
Office européen des brevets

(11) Veröffentlichungsnummer: **0 035 274**
**B1**

(12) # EUROPÄISCHE PATENTSCHRIFT

(45) Veröffentlichungstag der Patentschrift: **21.11.84**

(51) Int. Cl.³: **C 08 G 77/38**, C 08 G 81/00, C 08 G 63/76

(21) Anmeldenummer: **81101526.2**

(22) Anmeldetag: **04.03.81**

(54) **Verfahren zur Herstellung von mit Organo(poly)siloxan modifiziertem organischem Polymer.**

(30) Priorität: **04.03.80 DE 3008138**

(43) Veröffentlichungstag der Anmeldung: **09.09.81 Patentblatt 81/36**

(45) Bekanntmachung des Hinweises auf die Patenterteilung: **21.11.84 Patentblatt 84/47**

(84) Benannte Vertragsstaaten: **AT BE DE FR GB NL SE**

(56) Entgegenhaltungen:
**EP - A - 0 013 402**
**DE - B - 2 232 419**
**GB - A - 1 070 174**
**US - A - 4 069 178**

(73) Patentinhaber: **WACKER-CHEMIE GMBH, Prinzregentenstrasse 22, D-8000 München 22 (DE)**

(72) Erfinder: **Deubzer, Bernward, Dr. Dipl.-Chem., Virchowstrasse 14, D-8263 Burghausen (DE)**
Erfinder: **Esterbauer, Josef, Post Hochburg, A-5122 Unterweizberg Nr. 34 (AT)**
Erfinder: **Solbrig, Christian, Dr. Dipl.-Phys., Roseggerstrasse 3, D-8261 Mehring-Öd (DE)**
Erfinder: **Frey, Volker, Dr. Dipl.-Chem, Asternweg 7a, D-8263 Burghausen (DE)**

**EP 0 035 274 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die Herstellung von mit Organo(poly)siloxan modifiziertem organischem Polymer durch Umsetzung von C-gebundene Hydroxylgruppen enthaltendem organischem Polymer mit Si-gebundene Hydroxylgruppen und/oder über Sauerstoff an Silicium gebundene Alkylgruppen enthaltendem Organo(poly)siloxan ist schon seit längerer Zeit bekannt. Hierzu sei z. B. auf W. Noll, Chemie und Technologie der Silicone, 2. Auflage, Weinheim 1968, Seite 317 bis 326, verwiesen. Das erfindungsgemäße Verfahren hat gegenüber bisher bekannten Verfahren zur Herstellung von mit Organo(poly)siloxan modifiziertem organischem Polymer insbesondere die Vorteile, daß dabei eingesetztes organisches Polymer mit C-gebundenen Hydroxylgruppen erheblich höheres Molekulargewicht als bei den bisher bekannten Verfahren haben kann und daß es mit Organo(poly)siloxan modifiziertes organisches Polymer mit einer Viskosität ergibt, die in geringerem Ausmaß Veränderungen unter dem Einfluß von Wasser unterworfen ist.

Gegenstand der Erfindung ist ein Verfahren zur Herstellung von mit Organo(poly)siloxan modifiziertem organischem Polymer durch Umsetzung von C-gebundene Hydroxylgruppen enthaltendem organischem Polymer mit Si-gebundene Hydroxylgruppen und/oder über Sauerstoff an Silicium gebundene Alkylgruppen enthaltendem Organo(poly)siloxan, dadurch gekennzeichnet, daß diese Umsetzung in Gegenwart von Wasser, das in das Reaktionsgefäß für diese Umsetzung zusätzlich zu C-gebundene Hydroxylgruppen enthaltendem organischem Polymer, Si-gebundene Hydroxylgruppen und/oder über Sauerstoff an Silicium gebundene Alkylgruppen enthaltendem Organo(poly)siloxan und gegebenenfalls bei dieser Umsetzung gebildetem Wasser eingeführt wurde, durchgeführt wird.

Die bei dem erfindungsgemäßen Verfahren eingesetzten, C-gebundene Hydroxylgruppen ($\equiv$COH) enthaltenden organischen Polymeren können aus den gleichen Molekülbestandteilen aufgebaut sein, wie die C-gebundene Hydroxylgruppen enthaltenden organischen Polymeren, die bei den bisher bekannten Verfahren zur Herstellung von mit Organo(poly)siloxan modifiziertem organischem Polymer durch Umsetzung von C-gebundene Hydroxylgruppen enthaltendem organischem Polymer mit Si-gebundene Hydroxylgruppen und/oder über Sauerstoff an Silicium gebundene Alkylgruppen enthaltendem Organo(poly)siloxan, eingesetzt werden konnten. Beispiele für solche organische Polymere sind C-gebundene Hydroxylgruppen enthaltende Polyester, C-gebundene Hydroxylgruppen enthaltende Acrylharze, C-gebundene Hydroxylgruppen enthaltende Epoxidharze, Phenolharze, C-gebundene Hydroxylgruppen enthaltende Melaminharze, C-gebundene Hydroxylgruppen enthaltende Harnstoffharze, C-gebundene Hydroxylgruppen enthaltende Polycarbonate und Cellulosen.

Polyester sind bevorzugt. Die Polyester können aliphatische Mehrfachbindungen enthalten oder frei von aliphatischen Mehrfachbindungen sein. Die Polyester können modifiziert sein, z. B. mit aliphatische Mehrfachbindung aufweisende Monocarbonsäuren, oder unmodifiziert sein.

Beispiele für mindestens zwei Carboxylgruppen je Molekül aufweisende Carbonsäuren bzw. deren Anhydride bzw. deren niedere Ester, die als eine Art der Reaktionsteilnehmer bei der Herstellung von Polyester eingesetzt werden können, sind aliphatische Dicarbonsäuren, wie Oxalsäure, Bernsteinsäure, Glutarsäure, Adipinsäure, Pimelinsäure, Suberinsäure, Sebacinsäure, Decandicarbonsäuren, Dodecandicarbonsäuren, 2,2,4-Trimethyladipinsäure und Maleinsäureanhydrid, sowie aromatische Dicarbonsäuren bzw. deren Anhydride bzw. deren Ester bzw. Polycarbonsäuren, wie Phthalsäureanhydrid, Isophthalsäure, Terephthalsäure, Tetrahydrophthalsäure, Naphthalindicarbonsäuren, Trimellitsäure, Dimethylterephthalat und 1,2,4,5-Benzoltetracarbonsäure. Es kann eine Art von aliphatischer oder aromatischer, mindestens zwei Carboxylgruppen je Molekül aufweisender Carbonsäure oder deren Anhydrid oder Ester bei der Herstellung der Polyester eingesetzt werden. Es können aber auch Gemische aus mindestens zwei verschiedenen aliphatischen und/oder aromatischen, mindestens zwei Carboxylgruppen aufweisenden Carbonsäuren und/oder deren Anhydriden oder Estern bei der Herstellung der Polyester eingesetzt werden.

Beispiele für Alkohole mit mindestens zwei Hydroxylgruppen je Molekül, die als mindestens eine andere Art der Reaktionsteilnehmer bei der Herstellung der Polyester eingesetzt werden können, sind 2,2-Dimethyl-1,3-Propandiol, Trimethylolpropan, Pentaerythrit, Glycerin, Dimethylolcyclohexan und Äthylenglykol. Es kann eine Art von Alkohol mit mindestens zwei Hydroxylgruppen je Molekül bei der Herstellung der Polyester eingesetzt werden. Es können aber auch Gemische aus mindestens zwei verschiedenen Alkoholen mit mindestens zwei Hydroxylgruppen je Molekül bei der Herstellung der Polyester eingesetzt werden.

Beispiele für aliphatische Mehrfachbindung aufweisende Monocarbonsäuren, mit denen die Polyester modifiziert sein können, sind Sojaölfettsäure und Kokosnußölfettsäure. Die Polyester können aber auch anders modifiziert sein, z. B. mit modifizierenden Ölen, wie Leinöl, von aliphatischer Mehrfachbindung freien Carbonsäuren, wie Benzoesäure, und/oder Polyacrylaten.

Die bei dem erfindungsgemäßen Verfahren eingesetzten, Si-gebundene Hydroxylgruppen und/oder über Sauerstoff an Silicium gebundene Alkylgruppen enthaltenden Organo(poly)siloxane können die gleichen, Si-gebundene Hydroxylgruppen und/oder über Sauerstoff an Silicium gebundene Alkylgruppen enthaltenden Organo(poly)siloxane sein, die bei den bisher bekannten Verfahren zur Herstellung von mit Organo(poly)siloxan modifiziertem organischem Polymer durch Umsetzung von C-gebundene Hydroxylgruppen enthaltendem organischem Polymer mit Si-gebundene Hydroxylgruppen und/

oder über Sauerstoff an Silicium gebundene Alkylgruppen enthaltendem Organo(poly)siloxan eingesetzt werden konnten.

Die über Sauerstoff an Silicium gebundenen Alkylgruppen enthalten vorzugsweise 1 bis 4 Kohlenstoffatome je Gruppe.

Beispielhaft für bei dem erfindungsgemäßen Verfahren einsetzbare, Si-gebundene Hydroxylgruppen und/oder über Sauerstoff an Silicium gebundene Alkylgruppen enthaltende Organo(poly)siloxane sind somit Organopolysiloxane aus Einheiten der allgemeinen Formel

$$R_a Si(OR')_b O_{\frac{4-a-b}{2}},$$

worin R gleiche oder verschiedene, einwertige, gegebenenfalls substituierte Kohlenwasserstoffreste, R' Wasserstoff oder Alkylreste mit 1 bis 4 Kohlenstoffatomen bedeutet, a 0, 1, 2 oder 3 und durchschnittlich 0,9 bis 1,8 ist und b 0, 1, 2 oder 3 und durchschnittlich 0,5 bis 1,5 ist.

Beispiele für Kohlenwasserstoffreste R sind Alkylreste, wie der Methyl-, Äthyl-, n-Propyl-, Isopropyl-, n-Butyl- und sec.-Butylrest sowie Octyl- und Dodecylreste; Cycloalkylreste, wie der Cyclopentyl-, Cyclohexyl- und Cycloheptylrest; Alkenylreste, wie der Vinyl- und Allylrest; Arylreste, wie der Phenylrest; Alkarylreste, wie Tolylreste; und Aralkylreste, wie der Benzylrest. Beispiele für substituierte Kohlenwasserstoffreste R sind halogenierte Kohlenwasserstoffreste, wie der 1,1,1-Trifluorpropylrest und alpha,alpha,alpha-Trifluortolylreste sowie Chlorphenyl- und Dichlorphenylreste. Der Methyl- und der Phenylrest sind bevorzugt.

Beispiele für Alkylreste R' sind der Methyl-, Äthyl-, Isopropyl- und n-Butylrest. Der Methylrest ist als Alkylrest R' bevorzugt.

Einzelne Beispiele für bei dem erfindungsgemäßen Verfahren einsetzbare, Si-gebundene Hydroxylgruppen und/oder über Sauerstoff an Silicium gebundene Alkylgruppen enthaltende Organo(poly)siloxane ist ein Mischpolymerisat aus Monophenylsiloxaneinheiten und Dimethylsiloxaneinheiten mit 14 Gewichtsprozent Si-gebundenen Methoxygruppen und 5 Gewichtsprozent Si-gebundenen n-Butoxygruppen, sowie Organo(poly)siloxane der Formel

$$CH_3Si(OCH_3)R^1OSi(OCH_3)C_6H_5OSiR^1(OCH_3)CH_3$$

wobei $R^1$ den Methyl und/oder Phenylrest bedeutet,

$$CH_3Si(OCH_3)R^1OSi(OCH_3)C_6H_5OSiR^1(OR^2)OCH_3$$

wobei $R^1$ die vorstehend dafür angegebene Bedeutung hat und $R^2$ einen Alkylrest mit 2 bis 4 Kohlenstoffatomen bedeutet,

$$[CH_3OSi(C_6H_5)O]_4$$

2,6-Dimethyl-4,8-Diphenyl-2,4,6,8-tetramethoxy-cyclotetrasiloxan und das Organopolysiloxan der Formel

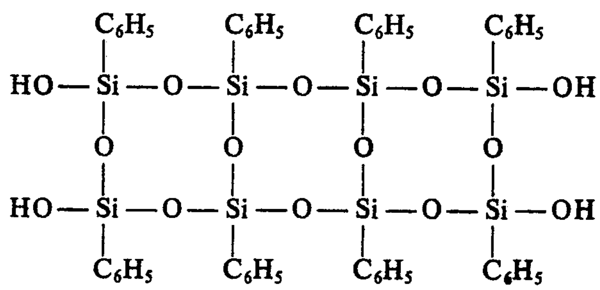

Das Verhältnis von C-gebundenen Hydroxylgruppen zu Si-gebundenen Hydroxyl- und/oder Alkoxygruppen kann in weiten Grenzen schwanken. Die C-gebundenen Hydroxylgruppen oder Si-gebundenen Hydroxyl- und/oder Alkoxygruppen können im Überschuß über das stöchiometrische Verhältnis vorliegen.

Vorzugsweise beträgt die Menge an Wasser, das in das Reaktionsgefäß für die Umsetzung von C-gebundenen Hydroxylgruppen enthaltendem organischem Polymer mit Si-gebundene Hydroxyl- und/oder Alkoxygruppen enthaltendem Organo(poly)siloxan zusätzlich zu den beiden vorstehend genannten Reaktionsteilnehmern und gegebenenfalls bei der Umsetzung gebildetem Wasser eingeführt wird, 1 bis 10 Gewichtsprozent, bezogen auf das Gesamtgewicht von C-gebundene Hydroxylgruppen enthaltendem organischem Polymer und Si-gebundene Hydroxylgruppen und/oder über Sauerstoff an Silicium gebundene Alkoxygruppen enthaltendem Organo(poly)siloxan.

Noch gemäß z. B. US-PS 4 069 178 (ausgegeben 17. Januar 1978, Ryuzo Mikami und Mitarbeiter, Dow Corning Corporation) wird kein Wasser bei der Umsetzung von C-gebundene Hydroxylgruppen enthaltendem Polyester mit Si-gebundene Hydroxylgruppen enthaltendem Organopolysiloxan zugesetzt. Es wird vielmehr das bei der Umsetzung gebildete Wasser im Maße seiner Bildung abdestilliert. Das erfindungsgemäße Verfahren war also nicht naheliegend.

Die erfindungsgemäße Umsetzung von C-gebundene Hydroxylgruppen enthaltendem organischem Polymer mit Si-gebundene Hydroxylgruppen und/oder über Sauerstoff an Silicium gebundene Alkylgruppen enthaltendem Organo(poly)siloxan wird vorzugsweise in einem Lösungsmittel durchgeführt. Beispiele für geeignete Lösungsmittel sind Xylole, Cyclohexanon, Alkylglykolester, wie Ethylglykolacetat oder n-Butylglykolacetat, gegebenenfalls im Gemisch mit ein- oder mehrwertigen Alkoholen, wie n-Butanol, Ethylenglykol, Butylenglykol, Ethylenglykolmonoethylether oder Ethylenglykolmono-n-butylester.

Bei der Umsetzung von C-gebundene Hydroxylgruppen enthaltendem organischem Polymer mit Si-gebundene Hydroxylgruppen und/oder über Sauerstoff an Silicium gebundene Alkylgruppen enthaltendem Organo(poly)siloxan können auch im Rahmen des erfindungsgemäßen Verfahrens die bei derartigen Umsetzungen üblicherweise mitverwendeten Umesterungs- oder Kondensationskatalysatoren mitverwendet werden. Beispiele für solche Katalysatoren sind Titanester, wie Tetraisopropyltitanat, Zirkonester und Säuren, wie Trifluoressigsäure.

Die Umsetzung von C-gebundene Hydroxylgruppen enthaltendem organischem Polymer mit Si-gebundene Hydroxylgruppen und/oder über Sauerstoff an Silicium gebundene Alkylgruppe enthaltendem Organopolysiloxan kann auch im Rahmen des erfindungsgemäßen Verfahrens bei den gleichen erhöhten Temperaturen und bei den gleichen Drücken erfolgen, die bei den bisher bekannten Verfahren zur Herstellung von mit Organo(poly)siloxan modifiziertem organischem Polymer durch Umsetzung von C-gebundene Hydroxylgruppen enthaltendem organischem Polymer mit Si-gebundene Hydroxyl- und/oder Alkoxygruppen enthaltendem Organo(poly)siloxan angewendet werden konnten.

Bei dem erfindungsgemäßen Verfahren kann durch Zusatz von Wasser vor der Umsetzung und einer Anwendung eines Rückflußkühlers oder geschlossenen Behälters oder Zuführung von Wasser während der Umsetzung die erfindungsgemäß geforderte Gegenwart von Wasser, das zusätzlich zu gegebenenfalls bei der Umsetzung gebildeten Wasser vorliegt, gewährleistet werden.

Die Umsetzung von C-gebundene Hydroxylgruppen enthaltendem organischem Polymer mit Si-gebundene Hydroxylgruppen und/oder über Sauerstoff an Silicium gebundene Alkylgruppen enthaltendem Organo(poly)siloxan ist beendet, wenn ein homogenes Polymer, ein sogenanntes »Cokondensat«, erhalten worden ist.

Nach der Durchführung des erfindungsgemäßen Verfahrens, bei dem ebenso wie bei den vergleichbaren bisher bekannten Verfahren durch Kondensation der C-gebundenen Hydroxylgruppen mit Si-gebundenen Hydroxylgruppen Wasser bzw. durch Kondensation der C-gebundenen Hydroxylgruppen mit Si-gebundenen Alkoxygruppen Alkanol gebildet wird, können gegebenenfalls Wasser und Alkanol abdestilliert werden.

Die mit Organo(poly)siloxan modifizierten organischen Polymeren verbinden die Vorteile von Organo(poly)siloxanen, wie Witterungsbeständigkeit und Wärmebeständigkeit, mit den Vorteilen von organischen Polymeren, wie Haftvermögen, Elastizität und Härtbarkeit.

Die erfindungsgemäß hergestellten, mit Organo(poly)siloxan modifizierten organischen Polymeren eignen sich z. B. als Bindemittel für luft- oder ofentrocknende, witterungs- und hitzebeständige Beschichtungen von beispielsweise Metallen, insbesondere durch Bandbeschichtung, oder Holz, als hitzebeständige, elektrisch isolierende Imprägniermittel für glasfaserumsponnene Drähte und als Bindemittel für Glimmer, Glasfasern, Steinwolle, Magnesiumoxyd oder Siliciumdioxyd insbesondere bei der Herstellung von Elektroisolierstoffen.

In den folgenden Beispielen beziehen sich alle Angaben von Teilen, Verhältnissen und Prozentsätzen auf das Gewicht, soweit nichts anderes angegeben ist.

## Beispiel 1

Zu einem Gemisch aus 3 Teilen eines Mischpolymerisates aus Monophenylsiloxaneinheiten und Dimethylsiloxaneinheiten im Molverhältnis von 2 : 1 mit 14% Si-gebundenen Methoxygruppen und 5% Si-gebundenen Butoxygruppen, 7 Teilen eines aus 59,5 Teilen Trimethylolpropan, 36,3 Teilen Isophthalsäure und 16,0 Teilen Adipinsäure hergestellten Polyesters mit einem berechneten Molekulargewicht von 860 und 0,035 Teilen Tetraisopropyltitanat in 15 Teilen Ethylglykolacetat werden 0,52 Teile (1,5%, bezogen auf das Gesamtgewicht des Gemisches) Wasser gegeben. Die so erhaltene Mischung wird zum Sieden unter Rückfluß erwärmt, bis ein homogenes Polymer erhalten wird. Anschließend werden die bis 100° C bei 1020 mbar siedenden Bestandteile des Gemisches abdestilliert. Danach wird solange auf 140° C erwärmt, bis die Polymerlösung eine Viskosität von 1020 $mm^2 \cdot s^{-1}$ bei 25° C hat.

Nach Zugabe von 1% Wasser fällt die Viskosität innerhalb von 7 Tagen um 20% des Anfangswertes.

Vergleichsversuch 1

Die in Beispiel 1 beschriebene Arbeitsweise wird wiederholt mit den Abänderungen, daß

der Zusatz der 0,52 Teile Wasser unterbleibt und das bei der Umsetzung entstandene Methanol im Maße seiner Bildung abdestilliert wird.

Die so erhaltene Polymerlösung hat eine Viskosität von 2500 $mm^2 \cdot s^{-1}$ bei 25° C. Nach Zugabe von 1% Wasser fällt die Viskosität innerhalb von 7 Tagen um mehr als 40% des Anfangswertes.

Beispiel 2

Die in Beispiel 1 beschriebene Arbeitsweise wird wiederholt mit den Abänderungen, daß

anstelle der 7 Teile des dort beschriebenen Polyesters 7 Teile eines aus 562 Teilen Trimethylolpropan, 368 Teilen Adipinsäure und 205 Teilen Isophthalsäure hergestellten Polyesters mit einem berechneten Molekulargewicht von 2260 und 2,08 Teile (6%) Wasser anstelle der 0,52 Teile Wasser

eingesetzt werden.

Nach dem Abdestillieren der bis 100° C bei 1020 mbar siedenden Bestandteile kann durch weiteres Erwärmen auf etwa 140° C die Viskosität gezielt auf gewünschte Werte (1000 bis 3000 $mm^2 \cdot s^{-1}$ bei 25° C) eingestellt werden.

Der so erhaltene, durch Organopolysiloxan modifizierte Polyester verbindet nach dem Aushärten durch 1 Minute erwärmen auf 260° C nach Zugabe von 3% Hexamethoxymethylmelamin, berechnet auf das Gewicht des modifizierten Polyesters, als Härtungskatalysator hohe Härte mit ausgezeichneter Elastizität.

Vergleichsversuch 2

Es wird versucht, die in Beispiel 2 beschriebene Arbeitsweise zu wiederholen mit der Abänderung, daß der Zusatz von Wasser unterbleibt. Die Mischung geliert, bevor ein homogenes Polymer erhalten wird.

Beispiel 3

Zu einem Gemisch aus 5 Teilen Monophenylpolysiloxan mit 5% Si-gebundenen Hydroxylgruppen, 5 Teilen eines Polyesters, der aus gleichen Teilen Trimethylolpropan und Terephthalsäure bereitet wurde,mit einem berechneten Molekulargewicht von 1240 und 0,035 Teilen Tetraisopropyltitanat in 15 Teilen Ethylglykolacetat werden 1,04 Teile Wasser (3%, bezogen auf das Gesamtgewicht des Gemisches) gegeben. Die so erhaltene Mischung wird zum Sieden unter Rückfluß erwärmt, bis ein homogenes Polymer erhalten wird. Anschließend werden die bis 100° C bei 1020 mbar siedenden Bestandteile des Gemisches abdestilliert. Das so erhaltene Produkt hat die erwünschte Viskosität von 1000 $m^2 \cdot s^{-1}$ bei 25° C.

Vergleichsversuch 3

Die in Beispiel 3 beschriebene Arbeitsweise wird wiederholt mit den Abänderungen, daß der Zusatz von Wasser unterbleibt und das entstandene Wasser im Maße seiner Bildung abdestilliert wird. Dabei steigt die Viskosität der Mischung so rasch an, daß kein weiterverarbeitbares Polymer erhalten wird.

**Patentanspruch**

1. Verfahren zur Herstellung von mit Organo(poly)siloxan modifiziertem organischem Polymer durch Umsetzung von C-gebundene Hydroxylgruppen enthaltendem organischem Polymer mit Si-gebundene Hydroxylgruppen und/oder über Sauerstoff an Silicium gebundene Alkylgruppen enthaltendem Organo(poly)siloxan, dadurch gekennzeichnet, daß diese Umsetzung in Gegenwart von Wasser, das in das Reaktionsgefäß für diese Umsetzung zusätzlich zu C-gebundene Hydroxylgruppen enthaltendem organischem Polymer, Si-gebundene Hydroxylgruppen und/oder über Sauerstoff an Silicium gebundene Alkylgruppen enthaltendem Organo(poly)siloxan und gegebenenfalls bei dieser Umsetzung gebildetem Wasser eingeführt wurde, durchgeführt wird.

2. Verfahren nach Anspruch 1, dadurch gekennzeichnet, daß die Menge an Wasser, das in das Reaktionsgefäß für die Umsetzung zusätzlich zu C-gebundene Hydroxylgruppen enthaltendem organischem Polymer, Si-gebundene Hydroxylgruppen und/oder über Sauerstoff an Silicium gebundene Alkylgruppen enthaltendem Organo(poly)siloxan und gegebenenfalls bei der Umsetzung dieser Stoffe gebildetem Wasser eingeführt wurde 1 bis 10 Gewichtsprozent, bezogen auf das Gesamtgewicht von C-gebundene Hydroxylgruppen enthaltendem organischem Polymer und Si-gebundene Hydroxylgruppen und/oder über Sauerstoff an Silicium gebundene Alkylgruppen enthaltendem Organo(poly)siloxan, beträgt.

## Claims

1. Process for the manufacture of an organo(poly)siloxane-modified organic polymer by reacting an organic polymer containing C-bonded hydroxyl groups with an organo(poly)siloxane containing Si-bonded hydroxyl groups and/or alkyl groups bonded to silicon through oxygen, characterised in that reaction is carried out in the presence of water that has been introduced into the reaction vessel for the reaction, in addition to the organic polymer containing C-bonded hydroxyl groups, the organo(poly)siloxane containing Si-bonded hydroxyl groups and/or alkyl groups bonded to silicon through oxygen and any water formed during the reaction.

2. Process according to claim, characterised in that the amount of water that has been introduced into the reaction vessel for the reaction, in addition to the organic polymer containing C-bonded hydroxyl groups, the organo(poly)siloxane containing Si-bonded hydroxyl groups and/or alkyl groups bonded to silicon through oxygen and any water formed during the reaction of those substances, is from 1 to 10% by weight, based on the total weight of the organic polymer containing C-bonded hydroxyl groups and the organo(poly)siloxane containing Si-bonded hydroxyl groups and/or alkyl groups bonded to silicon through oxygen.

## Revendications

1. Procédé de préparation d'un polymère organique modifié par un polyorganosiloxane par réaction d'un polymère organique contenant des groupes hydroxyles liés au C avec un polyorganosiloxane contenant des groupes hydroxyles liés à Si et/ou des groupes alkyles liés au silicium par de l'oxygène, caractérisé en ce cette réaction est effectuée en présence d'eau qui à été introduite dans le récipient réactionnel pour cette réaction en plus du polymère organique contenant des groupes hydroxyles liés à C, du polyorganosiloxane contenant des groupes hydroxyles liés à Si et/ou des groupes alkyles liés au silicium par de l'oxygène et éventuellement de l'eau formée lors de cette réaction.

2. Procédé suivant la revendication 1, caractérisé en ce que la quantité d'eau qui à été introduite dans le récipient réactionnel pour la réaction en plus du polymère organique contenant des groupes hydroxyles liés au C et du polyorganosiloxane contenant des groupes hydroxyles liés à Si et/ou des groupes alkyles liés au silicium par de l'oxygène et éventuellement de l'eau formée lors de la réaction de ces substances est de 1 à 10% en poids, par rapport au poids total de polymère organique contenant des groupes hydroxyles liés au C et de polyorganosiloxane contenant des groupes hydroxyles liés à et/ou des groupes alkyles liés au silicium par de l'oxygène.